# EUROPEAN PATENT APPLICATION

(11) **EP 4 488 200 A1**
(43) Date of publication of application: **08.01.2025**
(21) Application number: 22928276.9
(22) Date of filing: 08.11.2022
(51) Int. Cl.: B65G 1/04

(54) **WAREHOUSING SYSTEM**

(30) Priority: 28.02.2022 CN 202220416987 U; 20.06.2022 CN 202221541573 U
(71) Applicant: Beijing Geekplus Technology Co., Ltd., Chaoyang District Beijing 100102 (CN)
(72) Inventor: WANG, Mengdi, Beijing 100101 (CN); WANG, Xu, Beijing 100101 (CN)
(74) Representative: Habermann, Hruschka & Schnabel
(86) International application number: PCT/CN2022/130657
(87) International publication number: WO 2023/160014

(57) **Abstract**

A warehousing system (100) is provided. The system is provided with a storage region (100a) and includes a plurality of first shelving units (111) arranged in the storage region (100a), a plurality of travel aisles (120) formed between the first shelving units (111) facing each other, and a first transport passage (131) in communication with the travel aisles (120). The warehousing system (100) further includes second shelving units (112) arranged in an upper-layer space of the first transport passage (131) and located on two sides of extension lines of the travel aisles (120). A height (HL₂) of a lowest goods location of each second shelving unit (112) is greater than a height (HL₁) of a lowest goods location of each first shelving unit (111). According to the warehousing system (100), the goods locations are arranged above the first transport passage (131) for a robot (10) to switch aisles, which does not affect switching of the aisles by an access robot (10), and can improve warehousing capacity and a space utilization rate.

## Description

### CROSS-REFERENCE TO RELATED APPLICATIONS

This application refers to Chinese Patent Application No. 202220416987.5, filed on February 28, 2022 and entitled "WAREHOUSING SYSTEM", and Chinese Patent Application No. 202221541573.1, filed on June 20, 2022 and entitled "WAREHOUSING SYSTEM", which are incorporated herein by reference in their entireties.

### TECHNICAL FIELD

This application relates to the field of intelligent warehousing technologies, and in particular, to a warehousing system.

### BACKGROUND

Intelligent warehousing is an important part of logistics. The application of the intelligent warehousing is conducive to improving efficiency and accuracy of all parts of a warehousing system management, and constantly making new breakthroughs in warehousing capacity and a space utilization rate.

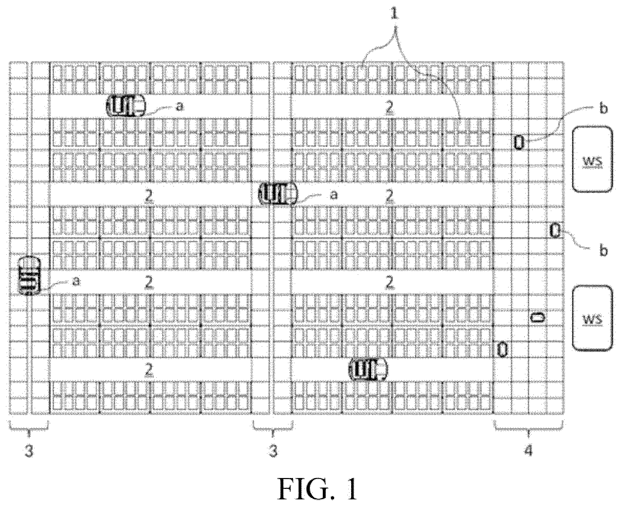

However, an existing intelligent warehousing system is not perfect. Referring to FIG. 1, FIG. 1 shows a schematic top layout of an existing warehousing system. The warehousing system is a system of a "goods box-to-person" picking type. A robot is adopted to transport a goods box of goods to be taken out and put from a shelving unit to a picking work station, and then products on the goods box are picked to an order box by a person or the robot. As shown in FIG. 1, the existing warehousing system includes a plurality of shelving units 1. Each of the shelving units 1 is provided with multi-layer goods locations of different heights for storing goods boxes. Aisles 2 are formed between the shelving units 1 facing each other, and different aisles 2 are in communication with each other through passages 3. An access robot a travels in the aisles 2 and the passages 3 to visit the shelving units 1, and performs goods box put and take-out operations relative to the goods locations of different heights of the shelving units 1. The access robot may also transport the goods box between the shelving units 1 and a picking workstation ws or another docking device arranged in the warehousing system. In addition, an expressway passage may also be arranged between each of the shelving units 1 and the picking workstation ws. The warehousing system further includes a transport robot b configured to transport the goods box between a temporary storage goods location, a temporary storage rack, or another docking device and the picking workstation ws, for example. It may be intuitively seen from the top view of FIG. 1 that the shelving units in the warehousing system are merely arranged in local locations, and the warehousing capacity and the space utilization rate are limited.

### SUMMARY

A series of simplified concepts are introduced in summary, which are further described in detail in the detailed description. The summary of this application is not intended to define key features and necessary technical features of the claimed technical solution, and is not intended to determine the protection scope of the claimed technical solution.

To at least partially resolve the foregoing problems, according to a first aspect of this application, a warehousing system is provided. The warehousing system is provided with a storage region. The warehousing system includes a plurality of first shelving units arranged in the storage region, a plurality of travel aisles arranged in the storage region and formed between the first shelving units facing each other, and a first transport passage arranged in the storage region and in communication with the travel aisles. The warehousing system further includes second shelving units arranged in an upper-layer space of the first transport passage and located on two sides of extension lines of the travel aisles. A height of a lowest goods location of each second shelving unit is greater than a height of a lowest goods location of each first shelving unit.

Advantageously, a height of a highest goods location of the first shelving unit may be substantially same as a height of a highest goods location of the second shelving unit.

Advantageously, the warehousing system may further include a first warehousing robot. The first warehousing robot is provided with a lifting gantry. The lifting gantry is constructed to be raised and lowered between a first height and a second height, so that the first warehousing robot is allowed to perform put and take-out operations within a corresponding height range. The second height is greater than the first height. The first warehousing robot operates at least in the travel aisles and the first transport passage, and the height of the lowest goods location of the second shelving unit is greater than the first height.

Advantageously, the warehousing system is further provided with an operation region, and may further include a second transport passage arranged in the storage region and adjacent to the operation region, and third shelving units arranged in an upper-layer space of the second transport passage. A height of a lowest goods location of each third shelving unit is greater than the height of the lowest goods location of the first shelving unit.

Advantageously, a height of a highest goods location of the first shelving unit may be substantially same as a height of a highest goods location of each third shelving unit.

Advantageously, the height of the lowest goods location of the third shelving unit may be less than the height of the lowest goods location of the second shelving unit.

Advantageously, the warehousing system may further include a second warehousing robot. The second warehousing robot operates at least in the second transport passage, and the lowest goods location of the third shelving unit is arranged to allow the second warehousing robot loaded with a goods box to pass under the lowest goods location of the third shelving unit. The goods box is a container that is capable of being stored at a goods location of at least one selected from the first shelving unit, the second shelving unit, and the third shelving unit.

Advantageously, the lowest goods location of the first shelving unit may be a temporary storage goods location. The second warehousing robot is configured to transport the goods box between the temporary storage goods location and the operation region. The first shelving units are constructed to allow the second warehousing robot loaded with the goods box to pass under the first shelving units and between the temporary storage goods locations.

In some embodiments, the third shelving units may be arranged on the two sides of the extension lines of the travel aisles.

In some other embodiments, the third shelving units may be arranged on two sides of the second transport passage, an additional aisle is formed between the third shelving units facing each other, and the second shelving units are arranged in a region where the first transport passage and the second transport passage intersect each other.

According to the warehousing system in the embodiments of this application, the goods locations are arranged above the first transport passage for a robot to switch aisles, which does not affect switching of the aisles by an access robot, and can improve warehousing capacity and a space utilization rate.

In some embodiments, each of the first shelving units is constructed to have at least two layers and at least four columns of goods locations on each layer, and two columns of goods locations located on two ends of a lowest layer of the first shelving unit are constructed as the temporary storage goods locations. A middle space of the lowest layer of the first shelving unit other than the two columns of the temporary storage goods locations is provided with a two-way transfer passage, and the two-way transfer passage is adjacent to each of the temporary storage goods locations.

The second warehousing robot is constructed to perform at least one selected from the following actions: taking out the goods box from the temporary storage goods location, putting the goods box at the temporary storage goods location, and traveling in the two-way transfer passage when loaded or not loaded with a container.

According to the warehousing system of this application, a middle part of the lowest layer of each of the first shelving units is used as the two-way transfer passage, and the second warehousing robot takes out the goods box only from the temporary storage goods location on the lowest layer, which reduces complexity of paths of the second warehousing robot, simplifies scheduling, and improves operating efficiency.

In one embodiment, the temporary storage goods location is at a higher location than the ground, and a height gap between the temporary storage goods location and the ground is constructed as an additional transfer passage, so that the second warehousing robot is allowed to travel in the additional transfer passage and move below the temporary storage goods location when not loaded with a container. According to this solution, it is convenient for the second warehousing robot to store and take out the goods box, and a walking path may be reduced.

In one embodiment, the first shelving unit is constructed to have four columns of goods locations on each layer. The first shelving unit includes two end columns and two middle columns located between the two end columns. The two-way transfer passages are located in location spaces of two middle columns on the lowest layer of the first shelving unit. According to this solution, the structure is simple and easy to implement.

In one embodiment, goods locations in the first shelving unit other than two columns of temporary storage goods locations located on the lowest layer are storage goods locations. According to this solution, other locations of the first shelving unit may be used to store the goods box for a long time. In one embodiment, each of the travel aisles is arranged between adj acent first shelving units. The warehousing system further includes a first warehousing robot, and the first warehousing robot is allowed to travel in the travel aisle. According to this solution, the first warehousing robot moves in the travel aisles, and the second warehousing robot moves on the lowest layer of the first shelving unit, which avoids intersection of paths of the first warehousing robot and the second warehousing robot and is conducive to improving the operating efficiency.

In one embodiment, the first warehousing robot is provided with a goods box access apparatus, and the goods box access apparatus is constructed to perform at least one selected from the following actions: taking out the goods box from the storage goods location and putting the goods box at the temporary storage goods location, and taking out the goods box from the temporary storage goods location and putting the goods box at the storage goods location. According to the foregoing arrangement, the first warehousing robot can be used to transport goods between the temporary storage goods location and the storage goods location.

In one embodiment, the storage goods locations located in the end columns of the first shelving units are constructed as first storage goods locations, and the first warehousing robot is constructed to take out the goods box from the first storage goods location and put the goods box at the temporary storage goods location. In this way, efficiency of the second warehousing robot taking out the goods box from the temporary storage goods location may be improved.

In one embodiment, the storage goods locations in the middle columns located on inner sides of the end columns of the first shelving units are constructed as second storage goods locations, and the first warehousing robot is constructed to take out the goods box from the second storage goods location and put the goods box at the first storage goods location. According to the foregoing arrangement, the second storage goods location is used to replenish the first storage goods location, which can improve efficiency of the first warehousing robot to move the goods box to the temporary storage goods location.

In one embodiment, a quantity of columns of the first shelving units is an even number. According to this solution, spaces of the first shelving units can be fully utilized.

In one embodiment, the two-way transfer passage includes at least one first passage and at least one second passage. The first passage allows traveling in a direction opposite to a direction of traveling allowed by the second passage. A quantity of the first passages is equal to a quantity of the second passages. In this way, it is beneficial to improve moving efficiency of the second warehousing robot.

According to a second aspect of this application, a warehousing system is provided, including:
a storage region;
a plurality of first shelving units, arranged in the storage region, where the first shelving units are configured to store goods boxes, and each of the first shelving units is provided with a temporary storage goods location and a two-way transfer passage adjacent to the temporary storage goods location;
a plurality of travel aisles, arranged in the storage region, where the travel aisles are formed between the first shelving units facing each other;
a first transport passage, arranged in the storage region, where the first transport passage is in communication with the travel aisles;
second shelving units, arranged in an upper-layer space of the first transport passage and located on two sides of extension lines of the travel aisles, where a height of a lowest goods location of each second shelving unit is greater than a height of a lowest goods location of each first shelving unit; and
a warehousing robot.

In one embodiment, the warehousing robot includes a first warehousing robot. The first warehousing robot is provided with a lifting gantry. The lifting gantry is constructed such that it may be raised and lowered between a first height and a second height, so that the first warehousing robot is allowed to perform put and take-out operations within a corresponding height range. The second height is greater than the first height. The first warehousing robot operates at least in the travel aisles and the first transport passage, and the height of the lowest goods location of the second shelving unit is greater than the first height.

In one embodiment, the warehousing robot includes a second warehousing robot. The second warehousing robot is constructed to perform at least one selected from the following actions: taking out the goods box from the temporary storage goods location, putting the goods box at the temporary storage goods location, and traveling in the two-way transfer passage when loaded or not loaded with a container.

In one embodiment, the temporary storage goods location is at a higher location than the ground, and a height gap between the temporary storage goods location and the ground is constructed as an additional transfer passage, so that the second warehousing robot is allowed to travel in the additional transfer passage and move below the temporary storage goods location when not loaded with a container.

In one embodiment, the warehousing system is further provided with an operation region, and further includes a second transport passage arranged in the storage region and adjacent to the operation region, and third shelving units arranged in an upper-layer space of the second transport passage. A height of a lowest goods location of each third shelving unit is greater than the height of the lowest goods location of the first shelving unit.

The second warehousing robot operates at least in the second transport passage, and the lowest goods location of the third shelving unit is arranged to allow the second warehousing robot loaded with the goods box to pass under the lowest goods location of the third shelving unit. The goods box is a container that is capable of being stored at a goods location of at least one selected from the first shelving unit, the second shelving unit, and the third shelving unit.

The third shelving units are arranged on two sides of the second transport passage, an additional aisle is formed between the third shelving units facing each other, and the second shelving units are arranged in a region where the first transport passage and the second transport passage intersect each other.

In one embodiment, each of the first shelving units is constructed to have at least two layers and at least four columns of goods locations on each layer, two columns of goods locations located on two ends of a lowest layer of the first shelving unit are constructed as the temporary storage goods locations, and a middle space of the lowest layer of the first shelving unit other than the two columns of the temporary storage goods locations is constructed as the two-way transfer passage.

The first shelving unit includes two end columns and at least two middle columns located between the two end columns, and the two-way transfer passages are located in location spaces of the middle columns.

In one embodiment, the first warehousing robot is provided with a goods box access apparatus, and the goods box access apparatus is constructed to perform at least one selected from the following actions: taking out the goods box from the storage goods location and putting the goods box at the temporary storage goods location, and taking out the goods box from the temporary storage goods location and putting the goods box at the storage goods location.

In one embodiment, the storage goods locations located in the end columns of the first shelving units are constructed as first storage goods locations, and the first warehousing robot is constructed to take out the goods box from the first storage goods location and put the goods box at the temporary storage goods location.

In one embodiment, the storage goods locations in the middle columns located on inner sides of the end columns of the first shelving units are constructed as second storage goods locations, and the first warehousing robot is constructed to take out the goods box from the second storage goods location and put the goods box at the first storage goods location.

### BRIEF DESCRIPTION OF THE DRAWINGS

FIG. 1 is a schematic top view of an existing warehousing system.
FIG. 2 is a schematic three-dimensional view of an access robot that may be used in a warehousing system according to an embodiment of this application.
FIG. 3 is a schematic top view of an example of a warehousing system according to an embodiment of this application.
FIG. 4 is a schematic front view of the warehousing system shown in FIG. 3.
FIG. 5 is a schematic top view of another example of a warehousing system according to an embodiment of this application.
FIG. 6 is a partial schematic diagram of first shelving units that may be used in a warehousing system according to an embodiment of this application.
FIG. 7 is another exemplary embodiment of a warehousing system according to this application, in which an access robot is about to replenish a first storage goods location.
FIG. 8 is another exemplary embodiment of a warehousing system according to this application, in which an access robot is about to replenish a temporary storage goods location.
FIG. 9 is another exemplary embodiment of a warehousing system according to this application, in which a transport robot is about to take out a goods box from a temporary storage goods location.
FIG. 10 is another exemplary embodiment of a warehousing system according to this application, in which a transport robot has taken out a goods box from a temporary storage goods location and moved to a two-way transfer passage.

### DETAILED DESCRIPTION

This application is further described in detail below with reference to the accompanying drawings and embodiments. It may be understood that specific embodiments described herein are merely used for illustrating a related invention, but not to limit the invention. For ease of description, only parts related to the invention are shown in the accompanying drawings. It is to be noted that the embodiments in this application and features in the embodiments may be combined with each other in case of no conflicts.

A warehousing system according to the embodiments of this application is designed based on a first warehousing robot that may be raised and lowered. The first warehousing robot may be an access robot.

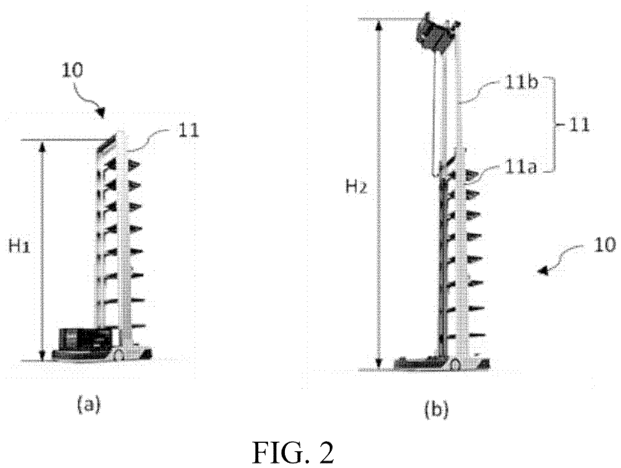

As an example only, FIG. 2 shows an access robot 10 that may be used in a warehousing system according to an embodiment of this application. As shown in FIG. 2, the access robot 10 is provided with a lifting gantry 11. The lifting gantry 11 is constructed such that it may be raised and lowered between a small first height H₁ (as shown in panel (a) of FIG. 2) and a large second height H₂ (as shown in panel (b) of FIG. 2) to allow the access robot 10 to perform put and take-out operations within a corresponding height range. In the example shown in FIG. 2, the lifting gantry 11 of the access robot 10 includes a first gantry 11a and a second gantry 11b. The second gantry 1 1b may move up and down relative to the first gantry 11a. When the second gantry 11b is lowered to a lowest location, the access robot 10 has the first height H₁ described above. When the second gantry 11b is raised to the highest location, the access robot 10 has the second height H₂ described above. As an example only, the first height H₁ may be around 5 m, and the second height H₂ may be around 8 m, for example.

In an existing warehousing system, such an access robot with a lifting gantry is configured to expand existing shelving units (see the shelving units 1 shown in FIG. 1). For example, the shelving units used in combination with the access robot 10 may be raised from the height of about 5 m to the height of about 8 m, which greatly increases the capacity of original shelving units.

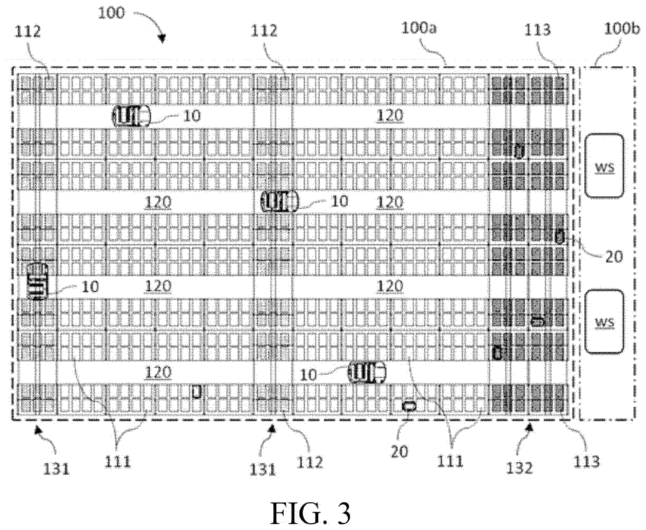

The warehousing system according to the embodiments of this application can further utilize the lifting gantry of the access robot to improve the warehousing capacity and the space utilization rate of the system. The warehousing system according to the embodiments of this application is to be described below with reference to FIG. 3 to FIG. 6.

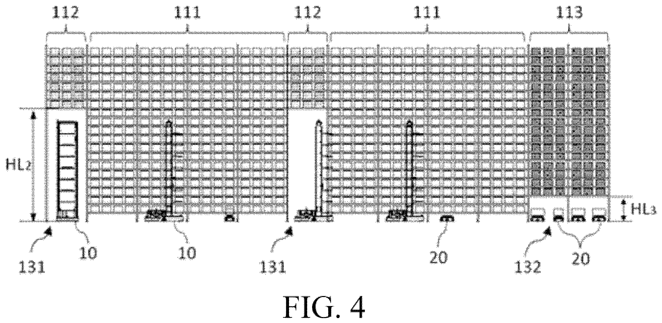

FIG. 3 and FIG. 4 respectively show a schematic top view and a schematic top view of an example of a warehousing system according to an embodiment of this application. As shown in FIG. 3, the warehousing system 100 is provided with a storage region 100a. The warehousing system 100 includes a plurality of first shelving units 111 arranged in the storage region 100a, a plurality of travel aisles 120 formed between the first shelving units 111 facing each other, and a first transport passage 131 in communication with the travel aisles 120. As shown in FIG. 4, the warehousing system 100 further includes second shelving units 112 arranged in an upper-layer space of the first transport passage 131. It may be seen from FIG. 3 that the second shelving units 112 are arranged on two sides of extension lines of the travel aisles 120.

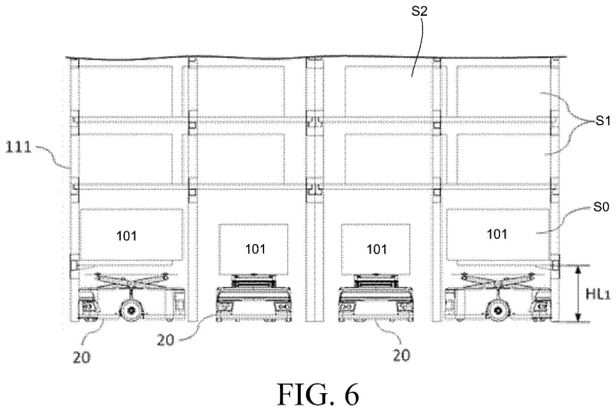

A height of a lowest goods location of each first shelving unit 111 is a height HL₁ of a first lowest goods location (refer to FIG. 6). As shown in FIG. 4, a height of a lowest goods location of each second shelving unit 112 is a height HL₂ of a second lowest goods location. According to this application, the height of the lowest goods location of the second shelving unit 112 (i.e., the height HL₂ of the second lowest goods location) is greater than the height of the lowest goods location of the first shelving unit 111 (i.e., the height HL₁ of the first lowest goods location).

The warehousing system 100 may include the access robot 10 as shown in FIG. 2. As shown in FIG. 3, the access robot 10 may operate at least in the travel aisles 120 and the first transport passage 131. The access robot 10 may be perform put and take-out operations on the first shelving units 111 arranged on two sides of the travel aisles 120 within an entire operating height range thereof (corresponding to the second height H₂ and below), may perform put and take-out operations on the second shelving units 112 arranged in an upper-layer space of the first transport passage 131 within a range of larger operating heights (corresponding to a range between the first height H₁ and the second height H₂), and may pass through the first transport passage 131 when the gantry 11 is lowered to the first height H₁, to switch between different travel aisles 120.

It may be seen that the second shelving units 112 configured and arranged above not only can allow the access robot 10 to pass under the second shelving units 112 in the first transport passage 131 to switch between different travel aisles 120, but also can allow the access robot 10 to perform the put and take-out operations on the goods locations of the second shelving units 112 at an elevated height.

It is to be understood that although the construction and arrangement of the shelving units of the warehousing system 100 is described above in combination with the access robot with a lifting gantry, the warehousing system in the embodiments of this application is not limited to being implemented and used in combination with such an access robot with a lifting gantry. As an example only, in a case that the access robot is provided with a fixed gantry height, the warehousing system may be configured with a suspended device dedicated to high goods locations beyond the operating height of the access robot. The suspended device may perform put and take-out operations at high goods locations and may be docked with for example the access robot. For example, the suspended device receives a to-be-stored goods box from the access robot and stores the goods box at the high goods location. Alternatively, the suspended device takes out the goods box from the high goods location and delivers the goods box to the access robot.

In short, according to the warehousing system in the embodiments of this application, the goods locations are arranged above the first transport passage for a robot to switch aisles, which does not affect switching of the aisles by an access robot, and can improve warehousing capacity and a space utilization rate.

Advantageously, as shown in FIG. 4, a height of a highest goods location of each first shelving unit 111 is substantially the same as a height of a highest goods location of each second shelving unit 112.

As shown in FIG. 3, the warehousing system 100 may be further provided with an operation region 100b. An operation such as picking goods in the goods box may be performed in the operation region 100b. The operation region 100b may be provided with a picking workbench ws, for example. However, the warehousing system according to the embodiments of this application is not limited to any specific arrangement of the operation region 100b.

As shown in FIG. 3 and FIG. 4, the warehousing system 100 may further include a second transport passage 132 arranged in the storage region 100a and adjacent to the operation region 100b, and third shelving units 113 arranged in an upper-layer space of the second transport passage 132. As shown in FIG. 4, a height of a lowest goods location of each third shelving unit 113 (i.e., a height HL₃ of a third lowest goods location) is greater than the height HL₁ of the lowest goods location of each first shelving unit 111.

Preferably, the height of the highest goods location of the first shelving unit 111 is substantially the same as a height of a highest goods location of each third shelving unit 113.

Preferably, as shown in FIG. 4, the height of the lowest goods location of the third shelving unit 113 (i.e., the height HL₃ of the third lowest goods location) is less than the height of the lowest goods location of the second shelving unit 112 (i.e., the height HL₂ of the second lowest goods location).

As shown in FIG. 3 and FIG. 4, the warehousing system 100 configured and arranged in this way may be used in combination with a second warehousing robot. The second warehousing robot may be a transport robot. Specifically, the warehousing system 100 may include a transport robot 20. The transport robot 20 operates at least in the second transport passage 132. In an optional implementation, the transport robot 20 may also operate in the travel aisles 120. Moreover, the height HL₃ of the lowest goods location of the third shelving unit 132 is set to allow the transport robot 20 loaded with the goods box to pass under the lowest goods location of the third shelving unit. Preferably, the transport robot 20 may travel in different directions in the second transport passage 132 (not limited to a direction parallel to or perpendicular to the travel aisles 120 as shown in the drawing), so that the second transport passage 132 becomes an expressway passage for the transport robot 20 between each shelving unit and the operation region 100b.

In the examples shown in FIG. 3 and FIG. 4, the third shelving units 113 are arranged in an upper-layer space of the second transport passage 132 and located on two sides of extension lines of the travel aisles 120. In this way, the access robot 10 may enter the first transport passage 131 and the second transport passage 132 in an extending direction of the travel aisles 120, and perform the put and take-out operations relative to the goods locations of the second shelving units 112 and the third shelving units 113.

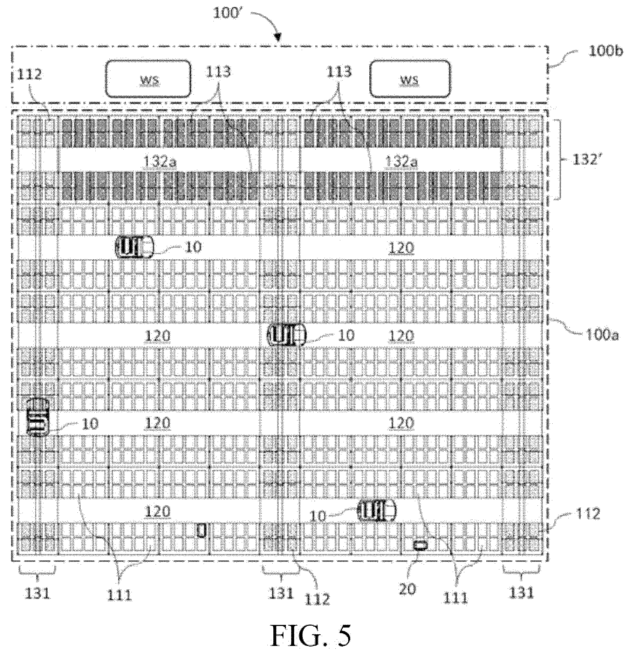

FIG. 5 is a schematic top view of another example of a warehousing system according to an embodiment of this application. A warehousing system 100' shown in FIG. 5 has substantially the same construction and arrangement as the warehousing system 100 described above with reference to FIG. 3 to FIG. 4. Differences are that in the example shown in FIG. 5, the second transport passage 132 is arranged parallel to the travel aisle 120, the third shelving units 113 are arranged on two sides of the second transport passage 132, and an additional aisle 132a is formed between the third shelving units 113 facing each other. As shown in FIG. 5, regions where the first transport passage 131 and the second transport passage 132 intersect each other may be arranged based on the first transport passage 131. To be specific, second shelving units 112 are arranged. In some other examples, the third shelving units 113 may also be partially arranged in the intersection region. For example, in a left intersection region, a middle intersection region, and a right intersection region shown in FIG. 5, the second shelving units 112 may be arranged in at least one selected from the intersection regions, and the third shelving units 113 may be arranged in the at least one intersection region. As an alternative or supplement, the second shelving units 112 are arranged on a side of the at least one intersection region away from the operation region 100b, and the third shelving units 113 are arranged on a side close to the operation region 100b.

Finally, a preferred example of first shelving units that may be used in a warehousing system according to an embodiment of this application is described with reference to FIG. 6. FIG. 6 is a partial schematic diagram of a preferred example of the first shelving units.

As shown in FIG. 6, each first shelving unit 111 has a plurality of goods locations with different height locations, and a lowest goods location with a lowest height may be constructed as a temporary storage goods location S0. The "temporary storage goods location" herein refers to a goods location arranged for temporarily storing a goods box 101 to implement docking/handover of the goods box between an access robot 10 and a transport robot 20. When the goods box 101 in an operation region 100b needs to be stored on one selected from the shelving units (any one selected from the first shelving unit 111, a second shelving unit 112, and a third shelving unit 113), the goods box 101 may be first transported by the transport robot 20 from the operation region 100b and stored at a temporary storage goods location S0 of the first shelving unit 111. Then the access robot 10 takes out the goods box 101 from the temporary storage goods location S0 and stores the goods box at a target goods location of a target shelving unit. When the goods box 101 stored on the shelving unit needs to be taken out and delivered to the operation region 100b, the foregoing process is performed exactly in reverse order. Details are not described herein again.

Preferably, as shown in FIG. 6, the first shelving units 111 are constructed to allow the transport robot 20 loaded with the goods box 101 to pass under the first shelving units 111 and between the temporary storage goods locations S0. For example, each first shelving unit 111 may be only partially provided with the temporary storage goods location S0 at the height HL₁ of the lowest goods location thereof, which means that other locations at the height are vacant and open, so that the transport robot 20 loaded with the goods box 101 can pass through.

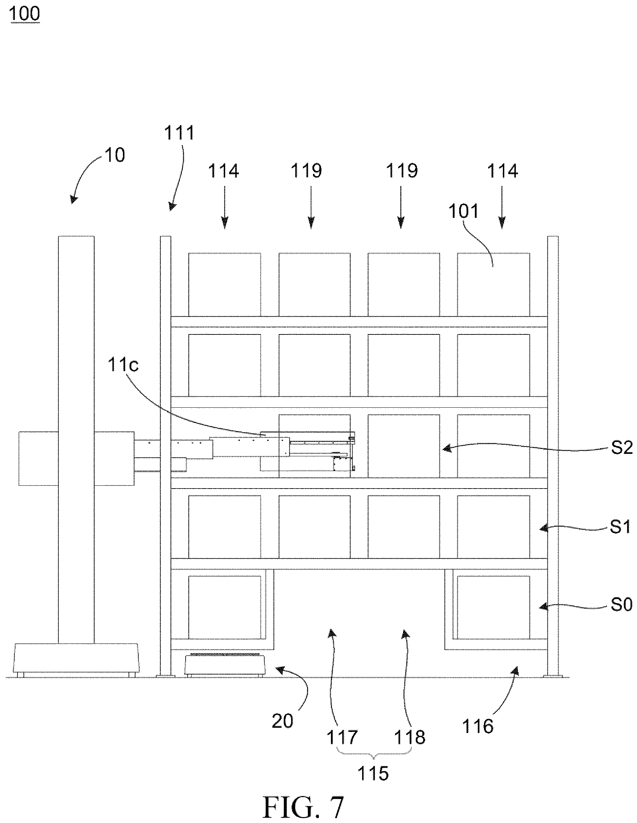

FIG. 7 to FIG. 10 illustrate another exemplary embodiment of a warehousing system 100 according to this application, in which a first shelving unit 111 and a transport robot 20 are emphatically described.

The first shelving unit 111 may be configured to store a goods box 101. The first shelving unit 111 is constructed to have at least two layers and have at least four columns of goods locations on each layer. The first shelving unit 111 is provided with end columns 114 located on two ends and middle columns 119 located between the two end columns 114. For example, in this implementation, the first shelving unit 111 is provided with four columns and five layers. In other words, two end columns 114 and two middle columns 119 are provided in this implementation.

A middle part of a lowest layer of the first shelving unit 111 is provided with a two-way transfer passage 115 for the transport robot 20 to pass in two directions. The two-way transfer passage 115 includes at least one first passage 117 and at least one second passage 118, to respectively satisfy requirements of reciprocating movement. In addition, each of the first passage 117 and the second passage 118 respectively corresponds to a space of a lowest layer of a column of the first shelving unit 111. In other words, the first passage 117 and the second passage 118 are respectively arranged on a lowest layer of the column. Specifically, in this implementation, the first passage 117 and the second passage 118 are respectively arranged on a lowest layer of one middle column 119. Alternatively, the lowest layer of the middle column 119 is constructed as the foregoing two-way transfer passage 115.

In an implementation not shown, the first shelving units 111 are constructed to have more columns, for example, an even number of columns such as 6 columns, 8 columns, and 10 columns. Other columns except the outermost end column 114 are all constructed as the middle columns 119. The lowest layers of these middle columns 119 are all constructed as two-way transfer passages 115 to provide walking passages for more transport robots 20. Preferably, a quantity of the first passages 117 and a quantity of the second passages 118 are equal, so as to improve walking efficiency of the transport robot 20.

In an implementation, the lowest layer of the end columns 114 is constructed as the temporary storage goods location S0, so that the temporary storage goods location may be adjacent to the two-way transfer passage 115. In addition, goods locations in the first shelving unit 111 other than two columns of temporary storage goods locations S0 located on the lowest layer are storage goods locations.

The transport robot 20 is constructed to perform actions such as taking out the goods box 101 from the temporary storage goods location S0, putting the goods box 101 at the temporary storage goods location S0, and traveling in the first passage 117 and/or the second passage 118 when loaded or not loaded with a container.

A movement direction of the transport robot 20 in the first passage 117 is opposite to a movement direction in the second passage 118. For example, the goods box 101 where goods to be hit by an order are located or the goods box 101 where goods with a higher popularity are located may be moved to the temporary storage goods location S0, so that the transport robot 20 quickly transports the goods to a next work station.

Preferably, the lowest temporary storage goods location S0 of the first shelving unit 111 is at a location higher than the ground, and a height gap between the temporary storage goods location S0 and the ground is constructed as an additional transfer passage 116, so that the transport robot 20 can travel in the additional transfer passage 116 and move below the temporary storage goods locations S0 when not loaded with a container. In this way, the transport robot 20 can readily take out the goods box and reduce a walking path.

In addition, the warehousing system 100 may further include an access robot 10. Travel aisles are arranged on a side of the first shelving units 111 or between adjacent first shelving units 111. The access robot 10 can move along the travel aisles. The access robot can be configured to move the goods box 101 to the temporary storage goods location S0 for the transport robot 20 to take out goods. Specifically, the access robot 10 is provided with a goods box access apparatus 11c. The goods box access apparatus 11c is constructed to take out the goods box 101 from the storage goods location and put the goods box at the temporary storage goods location S0, and take out the goods box 101 from the temporary storage goods location S0 and put the goods box at the storage goods location.

In a preferred implementation, for a plurality of columns of first shelving units 111, efficiency of the access robot 10 in taking out the goods box 101 located in a middle goods location is lower than that of taking out the goods box 101 located on an outer goods location. Other layers in the end column 114 are constructed as first storage goods locations S1. Layers in the middle column 119 other than the lowest layer are constructed as second storage goods locations S2.

The access robot 10 is constructed not to directly move the goods box 101 on the second storage goods location S2 to the temporary storage goods location S0. The access robot 10 needs to be allowed to only move the goods box 101 located in the first storage goods location S1 to the temporary storage goods location S0. The goods box 101 in the second storage goods location S2 is configured to replenish the first storage goods location S1. In this way, efficiency of the access robot 10 in moving the goods box 101 to the temporary storage goods location S0, and efficiency of the transport robot 20 in taking out goods can be improved.

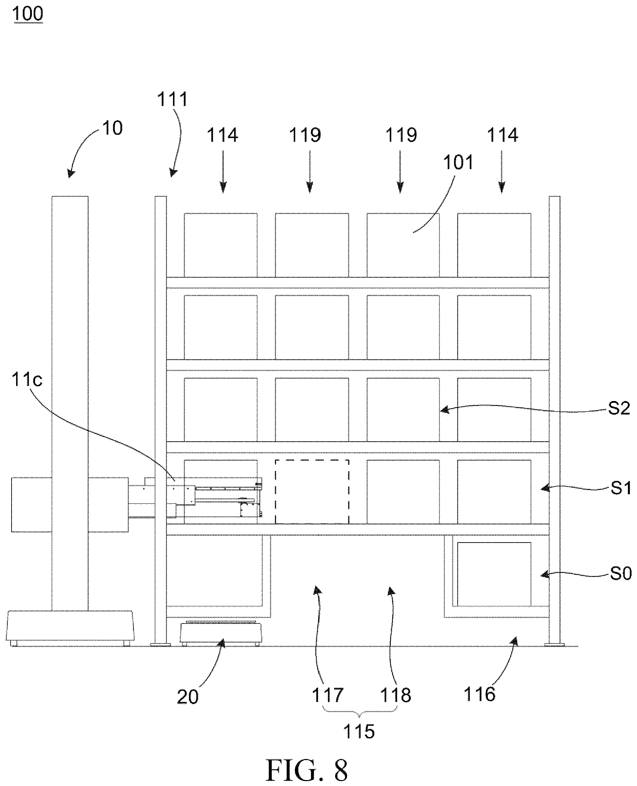

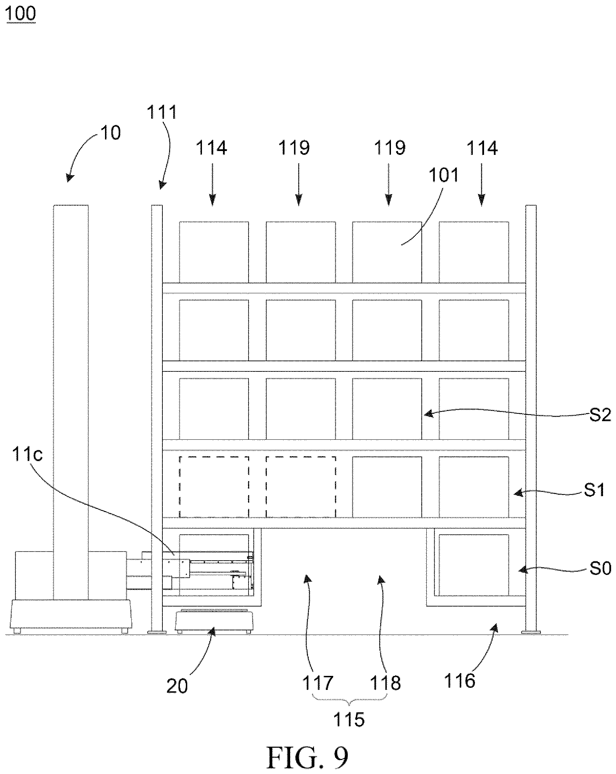

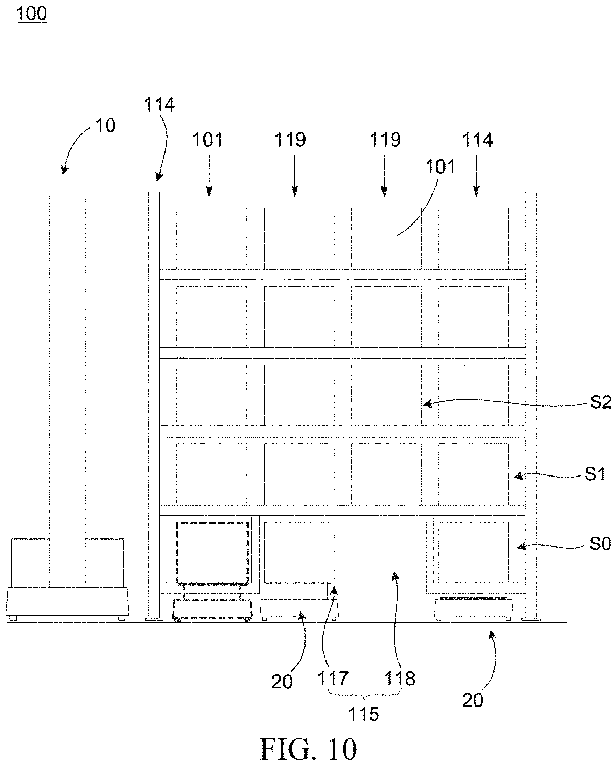

For example, referring to FIG. 7 to FIG. 10, the access robot 10 in FIG. 7 has taken out the goods box 101 on the second storage goods location S2 and is about to replenish the first storage goods location S1 located on the same layer. In FIG. 8, the first storage goods location S1 has been replenished, and the access robot 10 is about to move the goods box 101 to the temporary storage goods location S0. In FIG. 9, the access robot 10 has completed the replenishment of the temporary storage goods location S0, and the transport robot 20 has been on standby below the temporary storage goods location S0. In FIG. 10, the transport robot 20 has removed the goods box 101 and moves by using the two-way transfer passage 115.

According to the warehousing system 100 in this application, a middle part of a bottom side of the first shelving units 111 is used as the two-way transfer passage 115, and the transport robot 20 takes out goods only from the temporary storage goods location S0 on the bottom layer, which reduces complexity of paths of the transport robot 20, simplifies scheduling, and improves operating efficiency. In addition, the access robot 10 moves in the travel aisles, and the transport robot 20 moves on the bottom layer of the first shelving unit 111, avoiding intersection of paths of the two robots and detours, which is conducive to improving the operating efficiency and overall scheduling.

Unless otherwise defined, technical and scientific terms as used herein have the same meaning as those usually understood by a person skilled in the art of this application. The terms used herein are only for the purpose of describing the specific implementation, and are not intended to limit this application.

This application has been described by using the foregoing implementations, but it is to be understood that the foregoing implementations are only for the purpose of illustration and description, and this application is not limited to the foregoing implementations. More variations and modifications may be made according to teachings of this application, and these variations and modifications all fall within the scope of protection claimed by this application.

## Claims

1. A warehousing system, which is provided with a storage region and comprises a plurality of first shelving units arranged in the storage region, a plurality of travel aisles arranged in the storage region and formed between the first shelving units facing each other, and a first transport passage arranged in the storage region and in communication with the travel aisles;
wherein the warehousing system further comprises second shelving units arranged in an upper-layer space of the first transport passage and located on two sides of extension lines of the travel aisles, and a height of a lowest goods location of each second shelving unit is greater than a height of a lowest goods location of each first shelving unit.

2. The warehousing system according to claim 1, wherein a height of a highest goods location of each first shelving unit is substantially same as a height of a highest goods location of each second shelving unit.

3. The warehousing system according to claim 1, further comprising a first warehousing robot, wherein the first warehousing robot is provided with a lifting gantry, the lifting gantry is constructed to be raised and lowered between a first height and a second height, so that the first warehousing robot is allowed to perform put and take-out operations within a corresponding height range, and the second height is greater than the first height,
the first warehousing robot operates at least in the travel aisles and the first transport passage, and the height of the lowest goods location of the second shelving unit is greater than the first height.

4. The warehousing system according to any one of claims 1 to 3, further provided with an operation region, and further comprising a second transport passage arranged in the storage region and adjacent to the operation region, and third shelving units arranged in an upper-layer space of the second transport passage, wherein a height of a lowest goods location of each third shelving unit is greater than the height of the lowest goods location of the first shelving unit.

5. The warehousing system according to claim 4, wherein a height of a highest goods location of the first shelving unit is substantially same as a height of a highest goods location of each third shelving unit.

6. The warehousing system according to claim 4, wherein the height of the lowest goods location of the third shelving unit is less than the height of the lowest goods location of the second shelving unit.

7. The warehousing system according to claim 4, further comprising a second warehousing robot, wherein the second warehousing robot operates at least in the second transport passage, the lowest goods location of the third shelving unit is arranged to allow the second warehousing robot loaded with a goods box to pass under the lowest goods location of the third shelving unit, and the goods box is a container that is capable of being stored at a goods location of at least one selected from the first shelving unit, the second shelving unit, and the third shelving unit.

8. The warehousing system according to claim 7, wherein the lowest goods location of the first shelving unit is a temporary storage goods location, the second warehousing robot is configured to transport the goods box between the temporary storage goods location and the operation region, and the first shelving units are constructed to allow the second warehousing robot loaded with the goods box to pass under the first shelving units and between the temporary storage goods locations.

9. The warehousing system according to claim 4, wherein the third shelving units are arranged on the two sides of the extension lines of the travel aisles.

10. The warehousing system according to claim 4, wherein the third shelving units are arranged on two sides of the second transport passage, an additional aisle is formed between the third shelving units facing each other, and the second shelving units are arranged in a region where the first transport passage and the second transport passage intersect each other.

11. The warehousing system according to claim 8, wherein
each of the first shelving units is constructed to have at least two layers and at least four columns of goods locations on each layer, two columns of goods locations located on two ends of a lowest layer of the first shelving unit are constructed as the temporary storage goods locations, a middle space of the lowest layer of the first shelving unit other than the two columns of the temporary storage goods locations is provided with a two-way transfer passage, and the two-way transfer passage is adjacent to each of the temporary storage goods locations; and
the second warehousing robot is constructed to perform at least one selected from the following actions: taking out the goods box from the temporary storage goods location, putting the goods box at the temporary storage goods location, and traveling in the two-way transfer passage when loaded or not loaded with a container.

12. The warehousing system according to claim 11, wherein the temporary storage goods location is at a higher location than the ground, and a height gap between the temporary storage goods location and the ground is constructed as an additional transfer passage, so that the second warehousing robot is allowed to travel in the additional transfer passage and move below the temporary storage goods location when not loaded with a container.

13. The warehousing system according to claim 12, wherein the first shelving unit is constructed to have four columns of goods locations on each layer, the first shelving unit comprises two end columns and two middle columns located between the two end columns, and the two-way transfer passage is located in location spaces of the two middle columns on the lowest layer of the first shelving unit.

14. The warehousing system according to claim 13, wherein goods locations in the first shelving unit other than two columns of temporary storage goods locations located on the lowest layer are storage goods locations.

15. The warehousing system according to claim 14, wherein each of the travel aisles is arranged between adjacent first shelving units, the warehousing system further comprises a first warehousing robot, and the first warehousing robot is allowed to travel in the travel aisle.

16. The warehousing system according to claim 15, wherein the first warehousing robot is provided with a goods box access apparatus, and the goods box access apparatus is constructed to perform at least one selected from the following actions: taking out the goods box from the storage goods location and putting the goods box at the temporary storage goods location, and taking out the goods box from the temporary storage goods location and putting the goods box at the storage goods location.

17. The warehousing system according to claim 16, wherein the storage goods locations located in the end columns of the first shelving units are constructed as first storage goods locations, and the first warehousing robot is constructed to take out the goods box from the first storage goods location and put the goods box at the temporary storage goods location.

18. The warehousing system according to claim 17, wherein the storage goods locations in the middle columns located on inner sides of the end columns of the first shelving units are constructed as second storage goods locations, and the first warehousing robot is constructed to take out the goods box from the second storage goods location and put the goods box at the first storage goods location.

19. The warehousing system according to any one of claims 11 to 18, wherein a quantity of columns of the first shelving units is an even number.

20. The warehousing system according to claim 19, wherein the two-way transfer passage comprises at least one first passage and at least one second passage, the first passage allows traveling in a direction opposite to a direction of traveling allowed by the second passage, the first passage allows traveling in a direction opposite to a direction of traveling allowed by the second passage, and a quantity of the first passages is equal to a quantity of the second passages.

21. A warehousing system, comprising:
a storage region;
a plurality of first shelving units arranged in the storage region, wherein the first shelving units are configured to store goods boxes, and a lowest layer of each of the first shelving units is provided with a temporary storage goods location and a two-way transfer passage adjacent to the temporary storage goods location;
a plurality of travel aisles arranged in the storage region, wherein the travel aisles are formed between the first shelving units facing each other;
a first transport passage arranged in the storage region, wherein the first transport passage is in communication with the travel aisles;
second shelving units arranged in an upper-layer space of the first transport passage and located on two sides of extension lines of the travel aisles, wherein a height of a lowest goods location of each second shelving unit is greater than a height of a lowest goods location of each first shelving unit; and
a warehousing robot.

22. The warehousing system according to claim 21, wherein the warehousing robot further comprises a first warehousing robot, the first warehousing robot is provided with a lifting gantry, the lifting gantry is constructed to be raised and lowered between a first height and a second height, so that the first warehousing robot is allowed to perform put and take-out operations within a corresponding height range, the second height is greater than the first height, the first warehousing robot operates at least in the travel aisles and the first transport passage, and the height of the lowest goods location of the second shelving unit is greater than the first height.

23. The warehousing system according to claim 22, wherein the warehousing robot comprises a second warehousing robot, and the second warehousing robot is constructed to perform at least one selected from the following actions: taking out the goods box from the temporary storage goods location, putting the goods box at the temporary storage goods location, and traveling in the two-way transfer passage when loaded or not loaded with a container.

24. The warehousing system according to claim 23, wherein the temporary storage goods location is at a higher location than the ground, and a height gap between the temporary storage goods location and the ground is constructed as an additional transfer passage, so that the second warehousing robot is allowed to travel in the additional transfer passage and move below the temporary storage goods location when not loaded with a container.

25. The warehousing system according to claim 23, further provided with an operation region, and further comprising a second transport passage arranged in the storage region and adjacent to the operation region, and third shelving units arranged in an upper-layer space of the second transport passage, wherein a height of a lowest goods location of each third shelving unit is greater than the height of the lowest goods location of the first shelving unit;
the second warehousing robot operates at least in the second transport passage, the lowest goods location of the third shelving unit is arranged to allow the second warehousing robot loaded with the goods box to pass under the lowest goods location of the third shelving unit, and the goods box is a container that is capable of being stored at a goods location of at least one selected from the first shelving unit, the second shelving unit, and the third shelving unit; and
the third shelving units are arranged on two sides of the second transport passage, an additional aisle is formed between the third shelving units facing each other, and the second shelving units are arranged in a region where the first transport passage and the second transport passage intersect each other.

26. The warehousing system according to claim 23, wherein
each of the first shelving units is constructed to have at least two layers and at least four columns of goods locations on each layer, two columns of goods locations located on two ends of a lowest layer of the first shelving unit are constructed as the temporary storage goods locations, and a middle space of the lowest layer of the first shelving unit other than the two columns of the temporary storage goods locations is constructed as the two-way transfer passage; and
the first shelving unit comprises two end columns and at least two middle columns located between the two end columns, and the two-way transfer passages are located in location spaces of the middle columns.

27. The warehousing system according to claim 26, wherein
the first warehousing robot is provided with a goods box access apparatus, and the goods box access apparatus is constructed to perform at least one selected from the following actions: taking out the goods box from the storage goods location and putting the goods box at the temporary storage goods location, and taking out the goods box from the temporary storage goods location and putting the goods box at the storage goods location.

28. The warehousing system according to claim 27, wherein the storage goods locations located in the end columns of the first shelving units are constructed as first storage goods locations, and the first warehousing robot is constructed to take out the goods box from the first storage goods location and put the goods box at the temporary storage goods location.

29. The warehousing system according to claim 27, wherein the storage goods locations in the middle columns located on inner sides of the end columns of the first shelving units are configured as second storage goods locations, and the first warehousing robot is configured to take out the goods box from the second storage goods location and put the goods box at the first storage goods location.
